## Europäisches Patentamt
## European Patent Office
## Office européen des brevets

(11) Numéro de publication : **0 047 966**
**B1**

(12) # FASCICULE DE BREVET EUROPÉEN

(45) Date de publication du fascicule du brevet :
19.12.84

(51) Int. Cl.³ : **H 02 K 55/04, H 02 K 13/02**

(21) Numéro de dépôt : **81107057.2**

(22) Date de dépôt : **08.09.81**

(54) **Dispositif de connexion entre une bague collectrice et une amenée de courant d'un rotor supraconducteur.**

(30) Priorité : 15.09.80 FR 8019821

(43) Date de publication de la demande :
24.03.82 Bulletin 82/12

(45) Mention de la délivrance du brevet :
19.12.84 Bulletin 84/51

(84) Etats contractants désignés :
AT BE CH DE FR GB IT LI LU NL SE

(56) Documents cités :
CH-A- 383 484
DE-A- 2 157 929
DE-B- 1 269 236
FR-A- 1 411 493
FR-A- 2 219 561
FR-A- 2 235 518
FR-A- 2 316 775
FR-A- 2 377 725

(73) Titulaire : **ALSTHOM-ATLANTIQUE Société anonyme dite:**
**38, Avenue Kléber**
**F-75784 Paris Cedex 16 (FR)**
**ELECTRICITE DE FRANCE Service National**
**2, rue Louis Murat**
**F-75008 Paris (FR)**

(72) Inventeur : **Gillet, Roger**
**24 Avenue d'Altkirch**
**F-90000 Belfort (FR)**

(74) Mandataire : **Weinmiller, Jürgen et al**
**Zeppelinstrasse 63**
**D-8000 München 80 (DE)**

Jouve, 18, rue St-Denis, 75001 Paris, France

EP 0 047 966 B1

## Description

L'invention concerne un dispositif de connexion entre une bague collectrice et une amenée de courant d'un rotor supraconducteur.

Elle s'applique plus particulièrement à la construction d'une machine dynamoélectrique tournante telle qu'un alternateur dont le rotor comporte des enroulements inducteurs « supraconducteurs », c'est-à-dire constitués d'un matériau devenant supraconducteur lorsqu'il est refroidi à une température suffisamment basse souvent appelée « cryogénique » et valant par exemple 4 K. Le rotor comporte alors, outre ces roulements et les moyens de connexion électrique nécessaire à leur alimentation, un circuit de refroidissement permettant de porter les enroulements de la température ambiante jusqu'à cette température cryogénique avant la mise en fonctionnement de l'alternateur et de les y maintenir ensuite.

Ces moyens de connexion électrique comportent pour chaque connexion d'une part une bague tournante classique à température ambiante coopérant avec des balais fixes, d'autre part une « amenée de courant ». Le rôle d'une telle amenée (appelé en anglais « current lead ») est d'assurer la connexion électrique entre un conducteur ordinaire à température ambiante, et une extrémité d'un conducteur supraconducteur tout en ne nécessitant qu'une puissance frigorifique aussi faible que possible pour le maintien de cette extrémité à la « température cryogénique » malgré la chaleur apportée par l'amenée. La puissance frigorifique est la puissance électrique ou mécanique qu'il faut fournir aux organes de réfrigération, tels que des liquéfacteurs d'hélium, pour maintenir les éléments supraconducteurs à leur température de service.

Une telle amenée de courant est par exemple décrite dans le document FR-A 2 369 722.

Les conducteurs disposés longitudinalement, c'est-à-dire parallèlement à l'axe du rotor, et assurant la liaison entre les bagues et les amenées de courant sont soumis à des conditions sévères. En effet, d'une part, lors de la mise en froid du rotor qui se fait à faible vitesse de rotation, les amenées de courant se rétractent longitudinalement d'une valeur non négligeable. D'autre part les conducteurs connectés aux bagues collectrices se dilatent en service en raison de l'échauffement provoqué par le passage d'un fort courant (entre 5 000 et 10 000 Ampères) lorsque l'inducteur est excité.

Il faut par ailleurs tenir compte des risques de claquage électrique résultant d'une tension pouvant atteindre 10 kV en cas d'incidents. Ces risques sont accrus par la présence d'hélium chaud, qui est un très mauvais diélectrique.

Le fascicule de brevet FR-A 2 316 775 décrit un dispositif de connexion électrique des conducteurs d'amenée de courant des rotors d'une génératrice et d'une excitatrice, ce dispositif étant réalisé sous forme de barres souples superposées, un tenon de butée étant destiné à appliquer les deux barres superposées l'une contre l'autre sous l'effet des forces centrifuges. Une enceinte faisant office de boîtier est destinée à abriter les barres. Les barres souples sont formées par des empilages de bandes de cuivre minces. Mais une telle solution présente un encombrement pratiquement incompatible avec l'espace disponible très réduit, celui-ci ne permettant pas d'utiliser des vis. Par ailleurs, le fascicule de brevet FR-A 2 235 518 décrit un dispositif d'accouplement entre un rotor supraconducteur et un arbre d'excitatrice, la jonction des amenées de courant dans la zone d'accouplement étant déplaçable axialement sous l'effet des dilatations thermiques et se faisant par contacts enfichables. Une cavité abrite la zone d'accouplement et fait office de boîtier de connexion fixé au rotor. Elle présente une face avant du côté de la bague collectrice et une face arrière du côté de l'amenée du courant. Une tige conductrice arrière est connectée à l'amenée de courant et disposée longitudinalement dans le boîtier. L'amenée de courant selon ce document présente des risques de claquage électrique ou de mauvais contact lorsqu'il s'agit de transmettre de très fortes intensités. De plus son encombrement radial est gênant.

La présente invention a pour but la réalisation d'un dispositif de connexion entre bague collectrice et amenée de courant d'un rotor supraconducteur permettant d'obtenir une connexion fiable, sans création de contrainte mécanique gênante, sans risque de claquage électrique ni de mauvais contact et avec un encombrement réduit.

Elle a pour objet un dispositif de connexion entre bague collectrice et amenée de courant d'un rotor supraconducteur, ce rotor tournant autour d'un axe de rotation définissant une direction longitudinale, ce dispositif comportant :

— un boîtier de connexion isolant fixé au rotor et présentant une face « avant » du côté de la bague collectrice et une face « arrière » du côté de l'amenée du courant,

— et au moins une tige conductrice « arrière » connectée à l'amenée de courant et disposée longitudinalement dans le boîtier,

ce dispositif étant caractérisé par le fait qu'il comporte en outre :

— au moins une tige conductrice « avant » connectée à la bague collectrice et disposée longitudinalement dans le boîtier,

— un bloc métallique de contact « externe » maintenu dans le boîtier au contact des tiges avant et arrière, le contact d'au moins l'une de ces tiges avec ce bloc étant réalisé par appui latéral de cette tige contre une face radialement interne de ce bloc de manière à permettre un glissement longitudinal de cette tige sur cette face,

— et au moins une masselotte radialement mobile placée dans le boîtier dans une position radialement interne par rapport à chaque tige disposée en appui contre la face interne du bloc de contact interne, de manière que la force centrifuge résultant de la rotation du rotor et s'exerçant sur cette masselotte fournisse une force d'appui de cette tige contre ce bloc de contact et assure ainsi un bon contact électrique lorsque le rotor a atteint sa vitesse de service.

A l'aide des figures schématiques ci-jointes, on va décrire ci-après, à titre non limitatif, comment l'invention peut être mise en œuvre.

La figure 1 représente une vue d'une extrémité d'un rotor supraconducteur en coupe par un plan axial.

Les figures 2 et 3 représentent des vues du même rotor en coupe par des plans perpendiculaires à l'axe du rotor, selon les lignes II-II et III-III de la figure 1 respectivement.

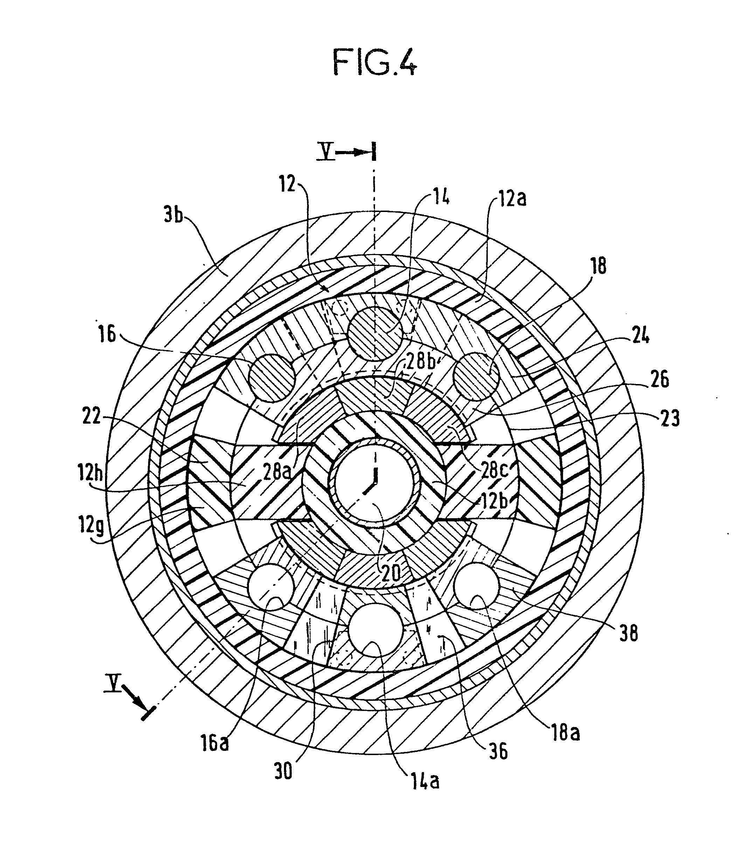

La figure 4 représente une vue d'un dispositif selon l'invention en coupe par un plan IV-IV de la figure 1, ce plan étant perpendiculaire à l'axe du rotor, l'échelle de cette figure étant agrandie.

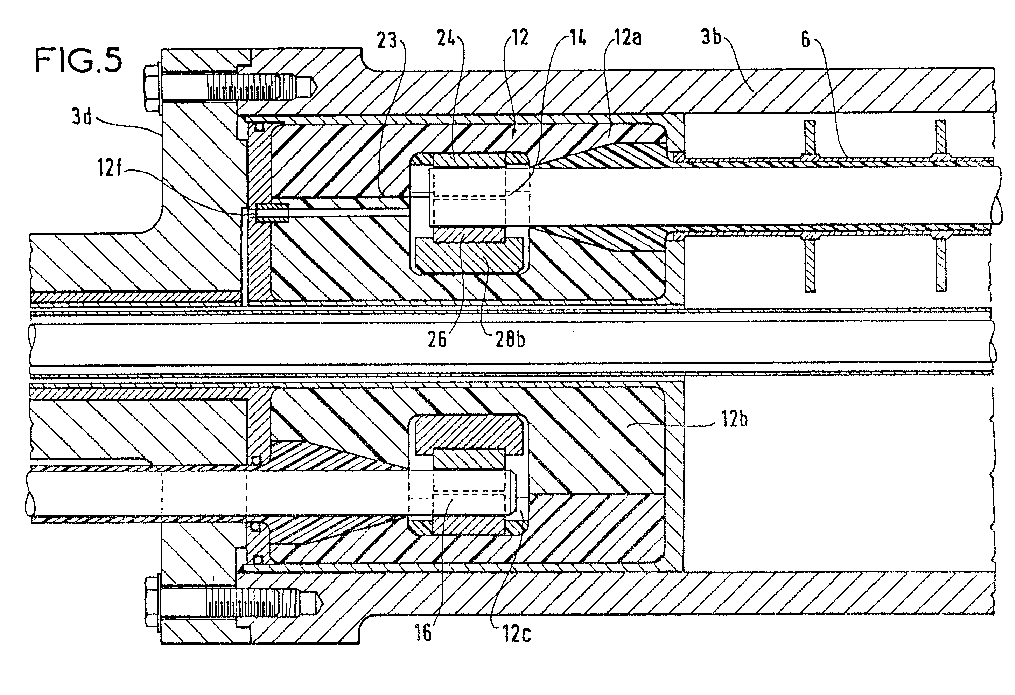

La figure 5 représente une vue du même dispositif en coupe par deux plans axiaux V-V de la figure 4.

La figure 6 représente une vue du boîtier du même dispositif en coupe par deux plans axiaux V-V de la figure 4.

Les figures 7 et 8 représentent des vues du même boîtier, en coupe par un plan perpendiculaire à l'axe, selon deux directions opposées, selon VII-VII et VIII-VIII de la figure 6, respectivement.

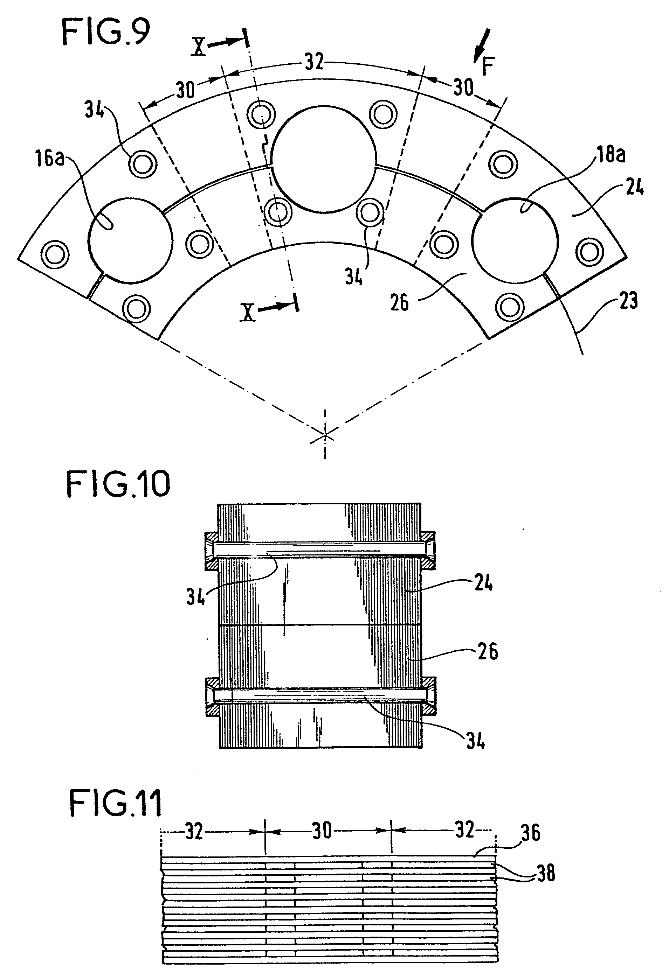

La figure 9 représente des tiges conductrices et des blocs de contact du même dispositif, en coupe par un plan perpendiculaire à l'axe du rotor, avec une échelle encore agrandie.

La figure 10 représente une vue des blocs de contact du même dispositif, en coupe par un plan axial selon X-X de la figure 9.

La figure 11 représente une vue de dessus partielle du bloc de contact externe du même dispositif, selon la flèche F de la figure 9.

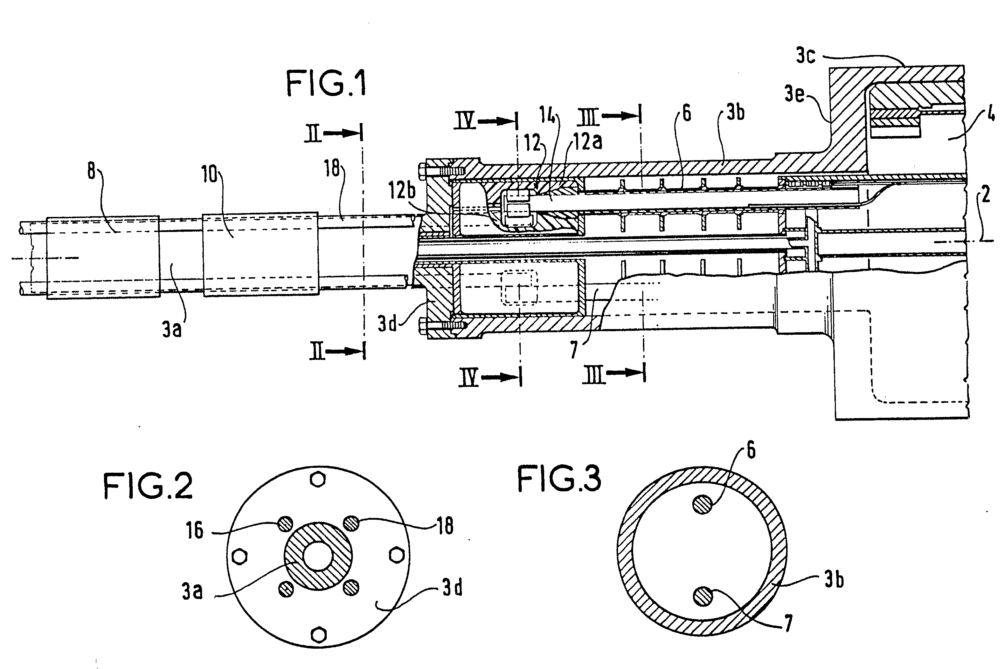

Dans la figure 1 on voit un rotor supraconducteur qui peut tourner autour d'un axe 2. Sa rigidité est assurée par un arbre creux enveloppant, constitué de tronçons 3a, 3b, 3c de divers diamètres réunis par des flasques 3d, 3e. Il est porté par des paliers non représentés. Il comporte un inducteur 4 contenant des enroulements supraconducteurs refroidis à l'hélium liquide et alimentés en courant continu par l'intermédiaire de deux amenées de courant 6 et 7 qui, comme précédemment expliqué, permettent la transition entre la zone supraconductrice et la zone à conduction normale. Ces amenées de courant reçoivent elles-mêmes le courant à travers deux bagues collectrices 8 et 10 tournant avec le rotor situées à une extrémité « avant » de celui-ci et coopérant avec des balais fixes non représentés. Les amenées de courant rejoignent, à leur extrémité avant, un boîtier de connexion isolant 12 dans la face arrière duquel elles pénètrent sous la forme de deux tiges « arrière » telles que 14, disposées longitudinalement, constituées de cuivre, et comportant un canal interne parcouru par de l'hélium provenant de l'enroulement supraconducteur et réchauffé en traversant l'amenée de courant.

Les bagues collectrices sont reliées à ce même boîtier chacune par deux tiges de cuivre telles que 16 et 18 pénétrant dans la face avant de ce boîtier. Un dispositif selon l'invention a pour fonction d'assurer la connexion électrique entre les tiges avant 16 et 18 et la tige arrière 14 dans le boîtier 12, en permettant des déplacements longitudinaux importants de ces tiges à vitesse nulle ou faible du rotor et en assurant à la vitesse de service le passage d'un courant pouvant atteindre 10 000 A par exemple, sans résistance de contact gênante.

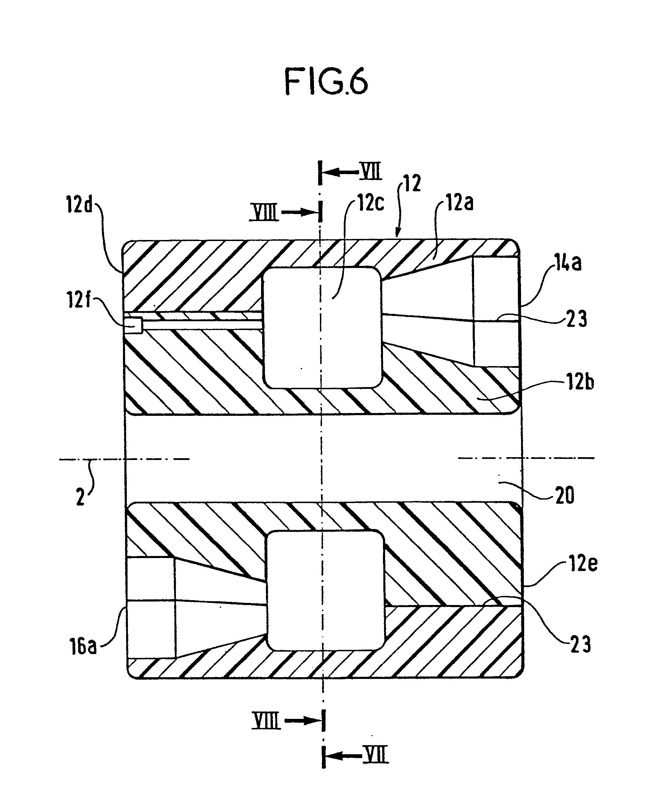

Le rotor est muni de deux dispositifs selon l'invention, un pour chaque connexion entre une bague collectrice et une amenée de courant. Un seul de ces dispositifs sera décrit en détail, étant entendu qu'ils sont parfaitement symétriques par rapport à l'axe du rotor. Ces deux dispositifs sont disposés dans le boîtier 12, qui est commun et de forme générale annulaire avec un passage axial 20 pour l'arbre du rotor. Une cloison diamétrale 22 le sépare en deux compartiments symétriques isolés l'un de l'autre et contenant chacun l'un des dispositifs. Ce boîtier est construit à partir de deux manchons tubulaires coaxiaux jointifs en résine thermodurcissable armée de fibre de verre, à savoir un manchon externe 12a (voir fig. 6) et un manchon interne 12b, avec un évidement médian dans chacune des faces jointives pour constituer une chambre annulaire 12c faisant tout le tour de l'axe, et des orifices tels que 16a et 14a sur les faces avant 12d et arrière 12e pour le passage des tiges telles que 14 et 16.

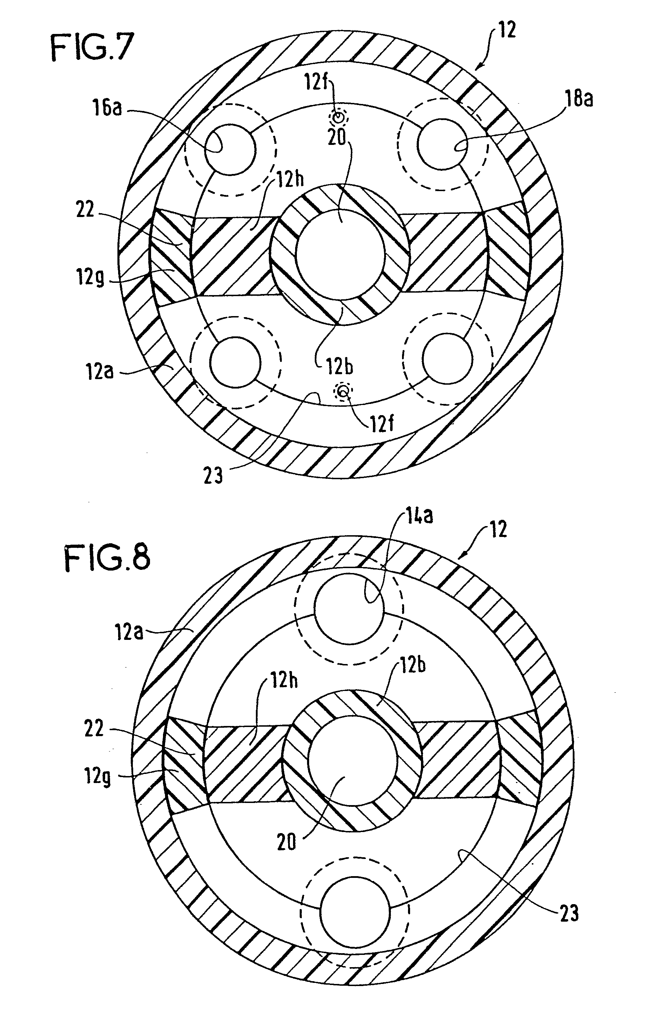

Pour assurer une bonne tenue aux hautes tensions électriques ces orifices sont évasés vers l'extérieur du boîtier, l'intervalle entre les parois des orifices et les parois latérales des tiges étant occupé ultérieurement par une résine thermodurcissable. Des orifices de faibles sections 12f permettent l'évacuation de l'hélium amené par le canal interne de la tige arrière 14. La cloison diamétrale 22 est constituée par collage de deux blocs annulaires, l'un 12g (voir fig. 7 et 8) sur la paroi interne du manchon externe 12a, l'autre 12h sur la paroi externe du manchon interne 12b, de manière à permettre d'enfiler le manchon interne 12b muni du bloc 12h dans le manchon externe 12a muni du bloc 12g, la surface de séparation entre les deux ensembles ainsi constitués étant un cylindre 23 de révolution autour de l'axe 2.

Chaque dispositif selon l'invention est disposé dans l'un des deux compartiments séparés, dans la chambre annulaire 12c, par la cloison 22. Il comporte un bloc de contact externe 24 et un bloc de contact interne 26, venant presque au contact avec le précédent selon la surface 23. Des évidements longitudinaux 14a, 16a et 18a sont creusés dans les faces en regard de ces blocs pour recevoir des tiges 14, 16 et 18. La profondeur de ces évidements est suffisamment faible pour permettre un serrage de ces tiges entre ces deux blocs.

Des masselottes 28 disposées contre la face radialement interne du bloc de contact interne assurent ce serrage de façon efficace lorsqu'elles sont soumises à la forte force centrifuge qui résulte de la rotation du rotor à sa vitesse de service (par exemple 3 000 tours/minute). Au contraire, lors de la mise du rotor en froid, la vitesse du rotor est faible ou nulle, et rien n'empêche les tiges 14, 16 et 18 de glisser longitudinalement par rapport aux blocs de contact.

Les tiges avant 16, 18 sont au nombre de deux et sont disposées de part et d'autre de la tige arrière 14 à la même distance de l'axe 2 du rotor que la tige arrière avec des décalages angulaires symétriques par rapport à cette tige.

Trois masselottes 28a, 28b, 28c sont disposées chacune de manière radialement interne par rapport à une de ces trois tiges.

Les blocs de contact présentent en section par un plan perpendiculaire à l'axe du rotor, la forme de secteurs de couronnes circulaires concentriques.

Chacun des blocs de contact 24, 26 est constitué par un empilement axial de tôles 36, 38 fixées les unes avec les autres en couches planes successives, la tôle étant alternativement présente 36 et absente 38 dans les couches successives de l'empilement dans des secteurs angulaires non pleins 30 situés entre deux tiges 14, 16 à distance de celles-ci, alors qu'elle est présente dans toutes les couches dans les secteurs angulaires pleins 32 incluant les tiges, de manière à permettre une flexion du bloc dans les secteurs non pleins pour rendre possible un petit déplacement longitudinal des tiges avant 16 par rapport à la tige arrière 14 même lorsque le rotor tourne à sa vitesse de service.

Ces tôles sont faites de cuivre de 0,5 mm d'épaisseur découpées et étamées, fixées entre elles à l'aide de rivets 34, puis par soudure.

Les deux blocs sont réalisés simultanément et séparés l'un de l'autre par sciage.

Une tôle sur deux est interrompue dans des secteurs angulaires non pleins.

## Revendications

1. Dispositif de connexion entre bague collectrice (8, 10) et amenée de courant (6, 7) d'un rotor supraconducteur, ce rotor tournant autour d'un axe (2) de rotation définissant une direction longitudinale, ce dispositif comportant :
— un boîtier de connexion (12) isolant fixé au rotor et présentant une face « avant » (12d) du côté de la bague collectrice (8, 10) et une face « arrière » du côté de l'amenée de courant (6, 7),
— et au moins une tige conductrice « arrière » (14) connectée à l'amenée de courant et disposée longitudinalement dans le boîtier,
ce dispositif étant caractérisé par le fait qu'il comporte en outre :

— au moins une tige conductrice « avant » (16, 18) connectée à la bague collectrice et disposée longitudinalement dans le boîtier,
— un bloc métallique de contact « externe » (24) maintenu dans le boîtier au contact des tiges avant et arrière, le contact d'au moins l'une de ces tiges avec ce bloc étant réalisé par appui latéral de cette tige contre une face radialement interne de ce bloc de manière à permettre un glissement longitudinal de cette tige sur cette face,
— et au moins une masselotte (28) radialement mobile placée dans le boîtier dans une position radialement interne par rapport à chaque tige disposée en appui contre la face interne du bloc de contact interne, de manière que la force centrifuge résultant de la rotation du rotor et s'exerçant sur cette masselotte fournisse une force d'appui de cette tige contre ce bloc de contact et assure ainsi un bon contact électrique lorsque le rotor a atteint sa vitesse de service.

2. Dispositif selon la revendication 1, caractérisé par le fait qu'il comporte en outre, un bloc métallique de contact « interne » (26) disposé dans le boîtier entre la masselotte et le bloc de contact « externe » (24), un contact de chacune des tiges avant et arrière avec les blocs de contact externe et interne étant réalisé par serrage de ces tiges entre la face radialement interne du bloc externe et une face radialement externe du bloc interne, la force de serrage étant fournie par la masselotte de manière à permettre un glissement longitudinal des tiges avant et arrière par rapport aux deux blocs de contact lorsque le rotor ne tourne pas rapidement et à assurer un bon contact par serrage lorsque le rotor tourne à sa vitesse de service.

3. Dispositif selon la revendication 2, caractérisé par le fait que les tiges avant (16, 18) sont au nombre de deux et sont disposées de part et d'autre de la tige arrière (14) à la même distance de l'axe (2) du rotor que la tige arrière (14) à la même distance de l'axe (2) du rotor que la tige arrière avec des décalages angulaires symétriques par rapport à cette tige, que trois masselottes (28a, 28b, 28c) sont disposées chacune de manière radialement interne par rapport à une de ces trois tiges, et que les blocs de contact (24, 26) présentent en section par un plan perpendiculaire à l'axe du rotor, la forme de secteurs de couronnes circulaires concentriques.

4. Dispositif selon la revendication 3, caractérisé par le fait que chacun des blocs de contact (24, 26) est constitué par un empilement axial de tôles (36, 38) fixées les unes avec les autres en couches planes successives, la tôle étant alternativement présente (36) et absente (38) dans les couches successives de l'empilement dans des secteurs angulaires non pleins (30) situés entre deux tiges (14, 16) à distance de celles-ci, alors qu'elle est présente dans toutes les couches dans des secteurs angulaires pleins (32) incluant les tiges, de manière à permettre une flexion du bloc dans les secteurs non pleins pour rendre possible un petit déplacement longitudinal des tiges avant

(16) par rapport à la tige arrière (14) même lorsque le rotor tourne à sa vitesse de service.

## Claims

1. A connection device between a collector ring (8, 10) and a current lead (6, 7) of a superconducting rotor, this rotor turning around a rotation axis (2) defining a longitudinal direction, this device comprising :
— an insulating connection box (12) fitted to the rotor and presenting a « frontal » face (12d) on the side of the collector ring (8, 10) and a « rear » face on the side of the current lead (6, 7),
— and at least a « rear » conducting rod (14) connected to the current lead and disposed longitudinally in the box,
this device being characterized in that it further comprises :
— at least a « frontal » conducting rod (16, 18) connected to the collector ring and disposed longitudinally in the box,
— an « outer » metal contact block (24) maintained in the box in contact with the frontal and rear rods, the contact of at least ont of these rods with this block being realized by laterally pressing this rod against a radially inner face of this block so as to permit a longitudinal sliding of this rod on this face,
— and at least one flyweight (28) which is radially mobile and placed in the box in a radially inner position with respect to each rod disposed in operative engagement with the inner face of the inner contact block, so that the centrifugal force resulting from the rotor rotation and being exerted on said flyweight furnishes a force which presses this rod against this contact block and thus ensures a good electric contact when the rotor has reached its operation speed.

2. A device according to claim 1, characterized in that it further comprises an « inner » metal contact block (26) disposed in the box between the flyweight and the « outer » contact block (24), a contact of each of the frontal and rear rods with the outer and inner contact block being realized by clamping these rods between the radially inner face of the outer block and a radially outer face of the inner block, the clamping force being furnished by the flyweight so as to permit a longitudinal sliding of the frontal and rear rods with respect to the two contact blocks when the rotor does not rotate rapidly and to ensure a good contact by the clamping effect when the rotor rotates at its operation speed.

3. A device according to claim 2, characterized in that there are two frontal rods (16, 18) which are disposed on either side of the rear rod (14) at the same distance from the rotor axis (2) as the rear rod with symmetrical angular shifts with respect to this rod, that three flyweights (28a, 28b, 28c) are disposed each in a radially inner position with respect to one of these three rods and that the contact blocks (24, 26) present a sectional view through a plane perpendicular to the rotor axis, having the form of segments of concentric circular rings.

4. A device according to claim 3, characterized in that each one of the contact blocks (24, 26) is constituted by an axial stack of metal sheets (36, 38) fixed to each other in successive plane layers, the sheet being alternately present (36) and absent (38) in the successive layers of the stack in angular segments (30) which are not solid and which are situated between two rods (14, 16) at a distance to these rods, whereas it is present in all the layers in the solid angular segments (32) including the rods, so as to permit a bending of the block in the not-solid segments in order to make a slight longitudinal shift of the frontal rods (16) possible with respect to the rear rod (14), even if the rotor rotates at its operation speed.

## Ansprüche

1. Verbindungsvorrichtung zwischen Schleifring (8, 10) und Stromzufuhr (6, 7) eines supraleitenden Rotors, der sich um eine eine Längsrichtung definierende Rotationsachse (2) dreht, wobei diese Vorrichtung aufweist :
— ein isolierendes Verbindungsgehäuse (12), das am Rotor befestigt ist und eine « Vorder »-Seite (12d) auf der Seite des Schleifrings (8, 10) und eine « Rück »-Seite auf der Seite der Stromzufuhr (6, 7) aufweist,
— und mindestens einen « hinteren » Leiterstab (14), der an die Stromzufuhr angeschlossen und in Längsrichtung in dem Gehäuse angeordnet ist,
wobei diese Vorrichtung dadurch gekennzeichnet ist, daß sie außerdem :
— mindestens einen « vorderen » Leiterstab (16, 18), der an den Schleifring angeschlossen und in Längsrichtung in dem Gehäuse angeordnet ist,
— einen « äußeren » metallischen Kontaktblock (24), der in dem Gehäuse mit den vorderen und hinteren Stäben in Kontakt gehalten wird, wobei der Kontakt von mindestens einem dieser Stäbe mit diesem Block durch seitlichen Druck dieses Stabes auf eine radial innen liegende Seite dieses Blocks hergestellt wird, um ein Gleiten dieses Stabs in Längsrichtung auf dieser Seite zu ermöglichen,
— und mindestens eine radial bewegliche Schwungmasse (28) aufweist, die in diesem Gehäuse in einer radial innen liegenden Stellung in bezug auf jeden auf die Innenseite des inneren Kontaktblocks aufliegenden Stab angeordnet ist, damit die Fliehkraft, die bei der Rotation des Rotors entsteht und auf diese Schwungmasse einwirkt, eine Druckkraft dieses Stabs auf diesen Block liefert und so einen guten elektrischen Kontakt bewirkt, wenn der Rotor seine Betriebsgeschwindigkeit erreicht hat.

2. Vorrichtung nach Anspruch 1, dadurch gekennzeichnet, daß sie außerdem einen « inneren » metallischen Kontaktblock (26) aufweist, der in dem Gehäuse zwischen der Schwungmasse und dem « äußeren » Kontaktblock (24) angeordnet ist, wobei ein Kontakt jedes der vorderen und hinteren Stäbe mit den inneren und äußeren Kontaktblöcken durch Einklemmen dieser Stäbe zwischen der radial inneren Fläche des äußeren Blocks und einer radial äußeren Fläche des inneren Blocks hergestellt wird, wobei die Klemmkraft durch die Schwungmasse geliefert wird, um ein Gleiten der vorderen und hinteren Stäbe in Längsrichtung in bezug auf die beiden Kontaktblöcke zu ermöglichen, wenn der Rotor sich nicht schnell dreht, und um einen guten Kontakt durch Einklemmen zu bewirken, wenn der Rotor sich mit Betriebsgeschwindigkeit dreht.

3. Vorrichtung nach Anspruch 2, dadurch gekennzeichnet, daß es zwei vordere Stäbe (16, 18) gibt, die auf beiden Seiten des hinteren Stabs (14) im gleichen Abstand von der Achse (2) des Rotors wie der hintere Stab angeordnet sind, mit symmetrischen winkelförmigen Verschiebungen in bezug auf diesen Stab, daß drei Schwungmassen (28a, 28b, 28c) je radial innen in bezug auf einen dieser drei Stäbe angeordnet sind und daß die Kontaktblöcke (24, 26) im Schnitt durch eine zur Achse des Rotors senkrechte Ebene die Form von konzentrischen Kreisringsektoren aufweisen.

4. Vorrichtung nach Anspruch 3, dadurch gekennzeichnet, daß jeder der Kontaktblöcke (24, 26) aus einer axialen Stapelung von Blechen (36, 38) besteht, die aneinander in aufeinanderfolgenden ebenen Schichten befestigt sind, wobei das Blech in nicht-vollen winkelförmigen Sektoren (30), die sich zwischen zwei Stäben (14, 16) im Abstand zu diesen befinden, abwechselnd in einer Schicht (36) vorhanden und in der nächsten (38) nicht vorhanden ist, während es in vollen winkelförmigen Sektoren (32), die die Stäbe einschließen, in allen Schichten vorhanden ist, um eine Biegung des Blocks in den nicht-vollen Sektoren zu ermöglichen, so daß eine kleine Längsverschiebung der vorderen Stäbe (16) in bezug auf den hinteren Stab auch dann möglich ist, wenn der Rotor mit Betriebsgeschwindigkeit dreht.

FIG.1

FIG.2

FIG.3

# FIG.4

FIG.5

0 047 966

# FIG.6

FIG.7

16a

12f

12

18a

20

22

12h

12g

12a

12b

12f

23

FIG.8

14a

12

12a

12h

12b

22

12g

20

23

FIG.9

FIG.10

FIG.11